## Europäisches Patentamt
## European Patent Office
## Office européen des brevets

(19)

(11) Veröffentlichungsnummer: **0 052 823**

**A1**

(12) **EUROPÄISCHE PATENTANMELDUNG**

(21) Anmeldenummer: **81109547.0**

(22) Anmeldetag: **06.11.81**

(51) Int. Cl.³: **A 01 B 63/112**

(30) Priorität: **21.11.80 US 209239**

(43) Veröffentlichungstag der Anmeldung:
**02.06.82 Patentblatt 82/22**

(84) Benannte Vertragsstaaten:
**AT DE FR GB IT SE**

(71) Anmelder: **DEERE & COMPANY**
**1 John Deere Road**
**Moline Illinois 61265(US)**

(72) Erfinder: **Treichel, Richard**
**3910 Clearview Drive**
**Cedar Falls Iowa 50613(US)**

(72) Erfinder: **Moon, Seaton**
**2009 Orchard Drive**
**Cedar Falls Iowa 50613(US)**

(74) Vertreter: **Gramm, Werner, Prof. Dipl.-Ing. et al,**
**Patentanwälte Gramm + Lins Theodor-Heuss-Strasse 2**
**D-3300 Braunschweig(DE)**

(54) Zugkraftregelung für Kraftheber von Ackerschleppern.

(57) Die Erfindung betrifft eine Zugkraftregelung für Kraftheber von Ackerschleppern, mit einem die Zugkraft ertastenden federmechanischen Fühler (28,34) zur Aufrechterhaltung einer normalen Zugkraft, die auf ein an den Kraftheber angebautes Arbeitswerkzeug (12) wirkt, dessen Arbeitstiefe in Abhängigkeit der Zugkraftänderungen korrigiert wird. Erfindungsgemäß wird ein hydraulischer Kraftverstärker (74) vorgesehen, um die Ansprechempfindlichkeit des Systems zu erhöhen, so daß diejenigen Kräfte verringert werden, die zur Regulierung der Arbeitstiefe des Arbeitswerkzeuges erforderlich sind.

FIG. 3

EP 0 052 823 A1

"Zugkraftregelung für Kraftheber von Ackerschleppern"

Die Erfindung betrifft eine Zugkraftregelung für Kraftheber von Ackerschleppern, mit einem die Zugkraft ertastenden federmechanischen Fühler zur Aufrechterhaltung einer normalen Zugkraft, die auf ein an den Kraftheber angebautes Arbeitswerkzeug wirkt, dessen Arbeitstiefe über eine Kraftjustiereinrichtung reguliert wird, die von einer Betätigungseinrichtung beaufschlagt wird, das von einem in Abhängigkeit von der Zugkraftänderung verstellbaren Zugkraftanzeiger beaufschlagt wird.

Derartige Vorrichtungen sind seit langem bekannt. Die genannte Kraftjustiereinrichtung besteht dabei meist aus einem hydraulischen Antrieb, der durch ein Ventil gesteuert wird, das einmal beaufschlagt wird durch die manuelle Einstellung einer bestimmten Arbeitstiefe und zum anderen in Abhängigkeit der Zugkraftänderungen, wobei die ausgewählte Arbeitstiefe beispielsweise zu groß ist zur Aufrechterhaltung einer gewünschten Geschwindigkeit des Ackerschleppers. Derartige Zugkraftänderungen ergeben sich durch erhöhte Bodendichte, durch Rutschen der Antriebsräder u.dgl.. Bei den meisten der vorbekannten Zugkraftregelungssystemen werden federmechanische Fühler verwendet, denen gegenüber die Zugkräfte im Gleichgewicht gehalten werden. Diese federmechanischen Fühler können z.B. Schraubenfedern, Biegestäbe, Torsionsstäbe, Blattfedern o.dgl. sein. Eine Vorrichtung ist auch bekanntgeworden, bei der ein im Zuggestänge angeordneter hydraulischer Fühler verwendet wird (deutsche Patentschrift 26 34 530). Allen diesen Systemen gemeinsam ist aber ein von dem genannten Fühler ausgehendes Signal an ein Ventil, das die hydraulische Hubeinrichtung oder eine vergleichbare Kraftjustiereinrichtung steuert.

Ein Problem ist allen Systemen gemeinsam; es ergibt sich aus den allen Steuergestängen anhaftenden Fehlern infolge von Leergang, Platzbegrenzungen u.dgl., die alle zu einer Ansprechverzögerung des Ventils auf das jeweilige Signal führen.

Die eingangs erläuterte Zugkraftregelung läßt sich der amerikanischen Patentschrift 2 940 530 entnehmen. Der federmechanische Fühler besteht hier aus einem Biegestab, während er bei einer Ausführungsform gemäß der amerikanischen Patentschrift 2 921 638 durch eine Schraubenfeder gebildet wird. Diese Lösungen sollen im Rahmen der vorliegenden Erfindungen als äquivalent gelten. Bei der Ausführungsform gemäß der amerikanischen Patentschrift 2 921 638 kann das die hydraulische Hubeinrichtung steuernde Ventil wahlweise in Abhängigkeit von den jeweiligen Zugkräften der von Hand eingestellten Vertikalposition des Arbeitsgerätes gegenüber dem Ackerschlepper oder aber von einer Kombination dieser beiden Signaleinrichtungen beaufschlagt werden. Insbesondere bei dieser Ausführungsform führt die Auswahleinrichtung dafür, welche der beiden Signaleinrichtungen das Ventil steuern soll, zu einer weiteren Verzögerung bei der Signalübertragung.

Dieses Problem wird bei der Ausführungsform gemäß der deutschen Patentschrift 26 34 530 durch einen Kraftverstärker gelöst, der in die Signalübertragungsmittel eingeschaltet ist, wobei jedoch die Zugkräfte durch einen hydraulischen Fühler gemessen werden.

Dieser Vorrichtung fehlt auch die vorstehend beschriebene Mehrfachfunktion gemäß dem amerikanischen Patent 2 921 638.

Der Erfindung liegt somit die Aufgabe zugrunde, bei der eingangs erläuterten Zugkraftregelung die Ansprechempfindlichkeit der Betätigungseinrichtung für die Kraftjustiereinrichtung zu erhöhen.

Diese Aufgabe wird gemäß der Erfindung dadurch gelöst, daß das Steuergestänge einen Kraftverstärker aufweist, der die Ansprechempfindlichkeit der Betätigungseinrichtung aufgrund einer Verstellung des Zugkraftanzeigers erhöht.

Dabei arbeitet der Kraftverstärker vorzugsweise hydraulisch, wobei vorteilhaft für die hydraulische Betätigung des Kraftverstärkers eine Zylinder-Kolben-Einheit mit einem dieser zugeordneten Ventil vorgesehen ist, das in Abhängigkeit von der Verstellung des Zugkraftanzeigers gesteuert wird.

Dabei ist es zweckmäßig, wenn die Steuerung des Ventils durch den Zugkraftanzeiger über ein mechanisches Gestänge erfolgt.

Eine Erweiterung dieses Systems ist vorzugsweise gekennzeichnet durch eine zusätzliche, an sich bekannte Einrichtung zur Vertikalverstellung des angebauten Arbeitswerkzeuges gegenüber dem Ackerschlepper unabhängig von der auf das Arbeitswerkzeug wirkenden Zugkraft, und durch einen in Abhängigkeit von dieser Vertikalverstellung verstellbaren Positionsanzeiger, wobei diese Vertikalverstellung ebenfalls über die genannte Kraftjustiereinrichtung erfolgt, deren Betätigungseinrichtung von demjenigen der beiden Anzeiger gesteuert wird, der von einer Auswahleinrichtung zur Übermittlung der entsprechenden Signale ausgewählt worden ist, wobei der Kraftverstärker nur bei Auswahl des Zugkraftanzeigers wirksam ist.

- 4 -

In der Zeichnung ist eine als Beispiel dienende Ausführungsform
der Erfindung dargestellt. Es zeigen:

Figur 1   in schematischer Darstellung den rückwärtigen
          Bereich eines Ackerschleppers mit einem angekuppelten Arbeitswerkzeug;

Figur 2   einen Querschnitt durch einen federmechanischen
          Fühler und

Figur 3   in schematischer Darstellung eine mechanische
          und hydraulische Steuerung zur Übermittlung von
          Steuersignalen auf einen hydraulischen Kraftheber.

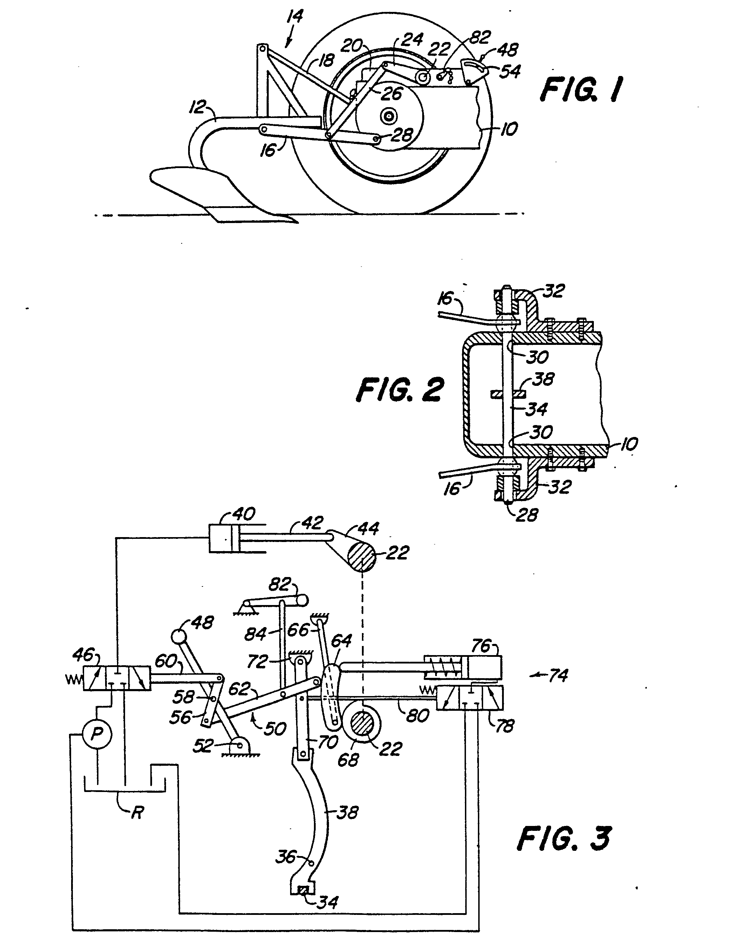

In Figur 1 ist der rückwärtige Bereich eines Ackerschleppers mit
dem Bezugszeichen 10 gekennzeichnet, wobei aus Gründen der besseren Übersichtlichkeit das rechte Hinterrad des Ackerschleppers
weggelassen worden ist. An den Ackerschlepper ist als Arbeitswerkzeug ein Pflug 12 angekoppelt und zwar über ein übliches
Dreipunkt-Anbausystem 14, das ein unteres Zuglenkerpaar 16 und
einen Oberlenker 18 aufweist. In einem oberen Bereich des Ackerschleppers ist ein Gehäuse 20 vorgesehen, in dem eine quer verlaufende Schwenkwelle 22 angeordnet ist, an deren Enden Hubarme 24 befestigt sind, von denen in Figur 1 nur einer dargestellt ist. Ein Hublenker 26 verbindet jeweils einen Hubarm 24
mit dem zugeordneten unteren Zuglenker 16. Die Verschwenkung der
Schwenkwelle 22 führt somit zu einem Anheben bzw. Absenken des
Pfluges 12 und zwar im wesentlichen um eine Querachse, die durch
einen insbesondere in Figur 2 dargestellten Querstab 28 gebildet
wird.

Dieser Querstab 28 ist an seinen beiden Enden bei 30 am Traktor
gelagert, wobei die beiden Querstabenden die Lagerungen überragen und das jeweilige vordere Ende der unteren Zuglenker 16 aufnehmen. An beiden Seiten des Traktors ist jeweils ein Bügel 32 befestigt, der die Enden des Querstabes 28 lose übergreift und so ermöglicht, daß die Querstabenden nach hinten ausbiegen können unter Einwirkung der auf die Zuglenker 16 wirkenden Zugkräfte, die sich durch das Ziehen des Pfluges 12 ergeben. Hinsichtlich weiterer Einzelheiten wird auf die Beschreibung der US-Patentschrift 2 940 530 verwiesen. Werden die Querstabenden nach hinten abgebogen, verbiegt sich dadurch der Mittelabschnitt 34 des Querstabes 28 nach vorn. Im Traktorgehäuse ist ein Zugkraftanzeiger 38 bei 36 auf einer Querachse verschwenkbar gelagert. Eine Ausbiegung des Mittelabschnitts 34 des Querstabes 28 nach vorn bzw. hinten führt zu einer entsprechenden Verschwenkung des Zugkraftanzeigers 38;diese Verschwenkung dient als Signal, das zu einer Justierung der Arbeitstiefe des Pfluges 12 führt.

Gemäß Figur 3 umfaßt das Gehäuse 20 für die Schwenkwelle 22 eine Kraftjustiereinrichtung, die in dem dargestellten Ausführungsbeispiel durch einen hydraulischen Kraftheber gebildet wird, der einen Zylinder 40 mit einem Einweg-Kolben 42 umfaßt, dessen Kolbenstange an einem inneren Kurbelarm 44 angreift, der fest mit der Schwenkwelle 22 verbunden ist. Die Bewegung des Kolbens 42 wird gesteuert von einem Hydrauliksystem, das ein Ventil 46, eine Pumpe P, einen Vorratsbehälter bzw. einen Sumpf R sowie Hydraulikleitungen aufweist, um wahlweise die passenden Verbindungen entsprechend dem beim Ventil 46 eingehenden Signal herzustellen.

Am Traktor ist an geeigneter Stelle ein Handsteuerhebel 48 angelenkt, der mit dem Ventil 46 über eine Differential- bzw. Servo-Steuerung geeigneter Bauart in Verbindung steht, die in Figur 3 insgesamt mit dem Bezugszeichen 50 gekennzeichnet ist. In dem dargestellten Ausführungsbeispiel kann der Handsteuerhebel 48 um seinen Anlenkpunkt 52 nach vorn oder hinten verschoben werden, wobei seine jeweilige Stellung durch eine übliche Klemmhalterung 54 (siehe Figur 1) fixiert wird. Ein kurzer Hebel 56 ist zwischen seinen Enden bei 58 an dem Handsteuerhebel 48, mit seinem einen Ende an einer mit dem Ventil 46 verbundenen Kolbenstange 60 und mit seinem anderen Ende an dem hinteren Ende eines Hebels 42 angelenkt, dessen vorderes Ende mit einer Rolle bestückt ist, die die rückwärtige Seite eines bogenförmigen Hebels 64 abtastet, der über eine Aufhängestange 66 frei schwingbar am Traktor gelagert ist. Die vordere gebogene Seite des genannten bogenförmigen Hebels 64 liegt an einem Nocken 68 an, der mit der Schwenkwelle 22 fest verbunden ist. Geht man davon aus, daß alle Teile des Gestänges fixiert sind, so bewirkt eine Verschiebung des Handsteuerhebels 48 im Uhrzeigersinn eine Vorwärtsverschiebung der Kolbenstange 60, so daß über das Ventil 46 Hydraulikdruck auf das linke Ende des Hubzylinders 40 gegeben wird, der über seine Kolbenstange 42 die Schwenkwelle 22 im Uhrzeigersinn verschwenkt und dadurch den Pflug 12 anhebt. Wird der Handsteuerhebel 48 entgegen dem Uhrzeigersinn verschwenkt, ergibt sich das entgegengesetzte Resultat. Bei einer Verschwenkung der Schwenkwelle 22 führt deren Nocken 68 zu einer Verschwenkung des bogenförmigen Hebels 64, und diese Verschwenkung wird über den Hebel 62 übertragen, der den Hebel 56 verschwenkt, um so das Ventil 46 in seine neutrale Stellung zurückzustellen und dadurch die neue bzw. angehobene Stellung des Pfluges festzuhalten, weil der bogenförmige Hebel 64 den abnehmenden Abschnitt des Schwenkwellennockens 68 abgreift.

Das obere Ende des Zugkraftanzeigers 38 ist verschwenkbar verbunden mit dem unteren Ende eines Steuerhebels 70, der am Traktor bei 72 hängend angelenkt ist. Dieser Steuerhebel 70 bildet zusammen mit anderen Steuerteilen die Übertragungseinrichtung zur

Übertragung der Verschwenkung des Zugkraftanzeigers 38 auf
einen Kraftverstärker 74. Letzterer umfaßt eine federbeaufschlagte Hydraulik-Kolben-Zylinder-Einheit 76 sowie ein Ventil 78, das
in der dargestellten Weise an die Pumpe P sowie den Vorratsbehälter R angeschlossen ist. DasVentil 78 wird von einer Feder
nach rechts gedrückt und ist mit dem Steuerhebel 70 über eine
mechanische Kraftübertragung, im vorliegenden Fall über eine
Kolbenstange 80 verbunden. Die Kolben-Zylinder-Einheit 76 überträgt über eine Kolbenstange Kraft und Verschiebung auf den
bogenförmigen Hebel 64.

Die Lage des vorderen Endes des Hebels 62 gegenüber der rückwärtigen Seite des bogenförmigen Hebels 64 kann verändert und in
der gewählten Lage justiert werden durch einen Wahlhebel 82, der
an geeigneter Stelle am Traktor angelenkt ist und mit dem
Hebel 62 über einen Verbindungslenker 84 in Verbindung steht.
Hinsichtlich weiterer Einzelheiten wird auf die US-Patentschrift
2 921 638 verwiesen. Gemäß dem dargestellten Ausführungsbeispiel
ist die ausgewählte Stellung des Hebels 62 so, daß er ausschließlich auf die Verschwenkung des Zugkraftanzeigers 38 anspricht.
Wird der Wahlhebel 82 nach unten verschoben, wandert das vordere
Ende des Hebels 62 zum unteren Ende des bogenförmigen Hebels 64
und macht dadurch das System ausschließlich ansprechbar auf die
vertikale Höheneinstellung des Arbeitswerkzeuges bzw. Pfluges 12,
dargestellt durch die Winkelstellung der Schwenkwelle 22, deren
Nocken 68 als Positionsanzeiger fungiert. Wie es auch bereits in
dem US-Patent 2 921 638 beschrieben ist, sind hinsichtlich der
Stellung des Hebels 62 zahlreiche Zwischenstellungen möglich,
bei denen sich eine Kombination der Signale vom Zugkraftanzeiger 38 sowie vom Positionsanzeiger 68 ergibt.

Nachfolgend wird die Arbeitsweise des Systems beschrieben, wie sie sich bei ausschließlichem Ansprechen auf die Verschwenkung des Zugkraftanzeigers 38 ergibt. Es soll unterstellt werden, daß die Arbeitstiefe des Pfluges 12 ursprünglich über den Hand- steuerhebel 48 eingestellt wurde. Dies bedeutet, daß sich das Ventil 46 in seiner neutralen Stellung befindet; die auf den Pflug 12 wirkende anfängliche Zugkraft beaufschlagt über die unteren Zuglenker 16 den Querstab 28, der in dieser Situation ebenso wie der Zugkraftanzeiger 38 im wesentlichen statisch sind. Tritt nunmehr eine Änderung der Zugkraft auf, die zu einer Vorwärtsverbiegung des Mittelabschnitts 34 des Querstabes 28 führt, erfolgt dadurch eine Verschwenkung des Zugkraftanzeigers 38 entgegen dem Uhrzeigersinn, so daß der Steuerhebel 70 nach hinten verschwenkt wird und dadurch die Kolbenstange 80 herauszieht und so das Ventil 78 nach links bzw. hinten verschiebt. Dadurch wird Druckflüssigkeit in die Hydraulikeinheit 76 geleitet und verschiebt deren Kolben nach links bzw. hinten. Dadurch wird wiederum das obere Ende des bogenförmigen Hebels 64 nach hinten verschwenkt, was wiederum zu einer Verschiebung des Hebels 62 nach hinten führt. Der Handsteuerhebel 48 ist in seiner Position festgelegt, so daß der Anlenkpunkt 58 nunmehr als festes Schwenklager für den Hebel 56 dient, der im Uhrzeigersinn verschwenkt wird und dadurch das Ventil 46 über dessen Kolbenstange 60 nach rechts verstellt. Dadurch wird Druckflüssigkeit in den Hubzylinder 40 geleitet, der über seine Kolbenstange 42 zu einer Verschwenkung der Schwenkwelle 22 im Uhrzeigersinn führt und so den Pflug 12 auf eine neue Vertikalposition anhebt, bis die ursprünglich eingestellte Zugkraft wieder erreicht wird. Bei Stabilisierung der Verhältnisse erfolgt eine Verschiebung des Steuergestänges in der Art, daß das Ventil 46 wieder in seine Ausgangsstellung zurückverschoben wird um so die neue Arbeitstiefe festzuhalten. Hierbei wandert das obere Ende des Zugkraftanzeigers 38

nach vorn und schiebt dabei über die Kolbenstange 80 das Ventil 78 nach rechts bzw. nach vorn, so daß der unter Federdruck stehende Kolben der Hydraulikeinheit 76 nach rechts verschoben wird und so eine Verschiebung des bogenförmigen Hebels 64 ermöglicht, die eine Vorwärtsbewegung des Hebels 62 und eine Zurückstellung des Ventils 46 in seine Neutralstellung zur Folge hat. Vergleichbare Ergebnisse, aber in umgekehrter Weise, werden dann erreicht, wenn die Zugkraft abnimmt. Vergleichbare Ergebnisse werden auch dann erhalten, wenn als Anzeiger, auf das das System anspricht, der Positionsanzeiger 68, also der Schwenkwellennocken fungiert. Grundsätzlich erhöht der Kraftverstärker 74 die Ansprechempfindlichkeit des Systems unabhängig von der ausgewählten Steuerung und verringert die zum Ansprechen erforderlichen Kräfte und zwar insbesondere bei der Zugkraftsteuerung, wo die Kräfte durch den Querstab 28 und die zahlreichen Lenker multipliziert werden. Wird der Wahlhebel 82 nach unten verschoben, wird der Hebel 62 dadurch bis zum untersten Ende des bogenförmigen Hebels 64 verschoben und erhält in dieser Stellung Signale ausschließlich vom Positionsanzeiger bzw. Schwenkwellennocken 68; bei dieser Einstellung besteht also keine Notwendigkeit für eine Kraftverstärkung. Erfindungsgemäß wird also der Kraftverstärker dem System zugestaltet, ohne seine Arbeitsweise bei Arbeitstiefen- oder Vertikalverstellungssteuerung zu beeinflussen.

Für den lediglich schematisch dargestellten Kraftverstärker 74 können verschiedene Paketeinheiten verwendet werden. Ein Beispiel ist in der deutschen Patentschrift 26 34 530 dargestellt. Diese Lösung vereinfacht die Konstruktion. Dieser Kraftverstärker läßt sich in vorhandene Hydrauliksysteme zusammen mit dem meisten der vorhandenen Steuerteile einbauen, verringert somit die erforderlichen Änderungen und ermöglicht somit eine verbesserte Arbeitsweise zu minimalen Kosten.

Aus vorstehenden Erläuterungen entnimmt ein Durchschnittsfachmann zahlreiche Möglichkeiten zur Abänderung, die aber alle
durch die Erfindung mit erfaßt sein sollen.

Gr/Gru.

Patentansprüche:

1. Zugkraftregelung für Kraftheber von Ackerschleppern, mit einem die Zugkraft ertastenden federmechanischen Fühler(28,34) zur Aufrechterhaltung einer normalen Zugkraft, die auf ein an den Kraftheber angebautes Arbeitswerkzeug (12) wirkt, dessen Arbeitstiefe über eine Kraftjustiereinrichtung (40,42,44) reguliert wird, die von einer Betätigungseinrichtung (46) beaufschlagt wird, die ihrerseits von einem Steuergestänge gesteuert wird, das von einem in Abhängigkeit von der Zugkraftänderung verstellbaren Zugkraftanzeiger (38) beaufschlagt wird, d a d u r c h   g e k e n n z e i c h n e t , daß das Steuergestänge einen Kraftverstärker (74) aufweist, der die Ansprechempfindlichkeit der Betätigungseinrichtung (46) aufgrund einer Verstellung des Zugkraftanzeigers(38) erhöht.

2. Vorrichtung nach Anspruch 1, dadurch gekennzeichnet, daß der Kraftverstärker (74) hydraulisch arbeitet.

3. Vorrichtung nach Anspruch 2, dadurch gekennzeichnet, daß für die hydraulische Betätigung des Kraftverstärkers (74) eine Zylinder-Kolben-Einheit (76) mit einem dieser zugeordneten Ventil (78) vorgesehen ist, das in Abhängigkeit von der Verstellung des Zugkraftanzeigers (38) gesteuert wird.

4. Vorrichtung nach Anspruch 3, dadurch gekennzeichnet, daß die Steuerung des Ventils (78) durch den Zugkraftanzeiger (38) über ein mechanisches Gestänge (70,80) erfolgt.

5. Vorrichtung nach einem der vorhergehenden Ansprüche, gekennzeichnet durch eine zusätzliche, an sich bekannte Einrichtung zur Vertikalverstellung des angebauten Arbeitswerkzeuges (12) gegenüber dem Ackerschlepper unabhängig von der auf das Arbeitswerkzeug wirkenden Zugkraft, und durch einen in Abhängigkeit von dieser Vertikalverstellung verstellbaren Positionsanzeiger (68), wobei diese Vertikalverstellung ebenfalls über die genannte Kraftjustiereinrichtung (40,42,44) erfolgt, deren Betätigungseinrichtung (46) von demjenigen der beiden Anzeiger (38 oder 68) gesteuert wird, der von einer Auswahleinrichtung zur Übermittlung der entsprechenden Signale ausgewählt worden ist, wobei der Kraftverstärker (74) nur bei Auswahl des Zugkraftanzeigers (38) wirksam ist.

Patentanwälte
G r a m m  +  L i n s
Gr/Gru.

1/1

FIG. 1

FIG. 2

FIG. 3

## Europäisches Patentamt

# EUROPÄISCHER RECHERCHENBERICHT

| | EINSCHLÄGIGE DOKUMENTE | | KLASSIFIKATION DER ANMELDUNG (Int Cl ) |
|---|---|---|---|
| Kategorie | Kennzeichnung des Dokuments mit Angabe, soweit erforderlich, der maßgeblichen Teile | betrifft Anspruch | **A 01 B 63/112** |
| X | US - A - 4 031 964 (TAKAHASHI)<br><br>* Spalte 2, Zeilen 48-60; Spalte 4, Zeilen 32-57; Figuren 1,3 *<br><br>-- | 1-3,5 | |
| DA | DE - A - 2 624 530 (DEERE & CO.)<br><br>* Insgesamt *<br><br>-- | 1,2 | |
| A | US - A - 4 057 109 (NELSON) | 1 | |
| A | US - A - 4 173 259 (HOCKENKAMP) | 1 | RECHERCHIERTE SACHGEBIETE (Int Cl ⁷) |
| A | FR - A - 2 171 967 (REGIE NATIO- NALE DES USINES RENAULT)<br><br>* Seite 4, Zeilen 8-10; Figur 1 * <br><br>---- | 1,2 | **A 01 B** |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P Zwischenliteratur
T der Erfindung zugrunde liegende Theorien oder Grundsätze
E älteres Patentdokument das jedoch erst am oder nach dem Anmeldedatum veröffentlicht worden ist
D in der Anmeldung angeführtes Dokument
L aus andern Gründen angeführtes Dokument

&· Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 17-02-1982 | VERDOODT |

EPA form 1503.1   06.78